(19) Europäisches Patentamt
European Patent Office
Office européen des brevets

(11) Numéro de publication: **0 184 513**
**A1**

(12) # DEMANDE DE BREVET EUROPEEN

(21) Numéro de dépôt: 85402393.4

(22) Date de dépôt: 03.12.85

(51) Int. Cl.⁴: F 16 L 9/12
F 16 L 11/08

(30) Priorité: 04.12.84 FR 8418466

(43) Date de publication de la demande:
11.06.86 Bulletin 86/24

(84) Etats contractants désignés:
DE GB

(71) Demandeur: THOMSON-CSF
173, Boulevard Haussmann
F-75379 Paris Cedex 08(FR)

(72) Inventeur: Leblanc, Claude
THOMSON-CSF SCPI 173, bld Haussmann
F-75379 Paris Cedex 08(FR)

(72) Inventeur: Crevoisier, Philippe
THOMSON-CSF SCPI 173, bld Haussmann
F-75379 Paris Cedex 08(FR)

(74) Mandataire: Trocellier, Roger et al,
THOMSON-CSF SCPI 19, avenue de Messine
F-75008 Paris(FR)

(54) **Tuyau souple, basse pression, notamment pour véhiculer un liquide de refroidissement.**

(57) Tuyau permettant de travailler dans des conditions mécaniques et climatiques sévères et de véhiculer un produit agressif, par exemple un liquide de refroidissement.

Le tuyau est fabriqué à partir d'un matériau de base (1, 3) constitué par un élastomère de fluorosilicone. Il peut comporter en outre un gainage interne (2) à base de tresses textiles (naturelles ou synthétiques) ou métalliques, ou de fibres de verre.

L'invention s'applique notamment en aéronautique dans des systèmes de désignation d'objectif par laser, pour refroidir l'illuminateur.

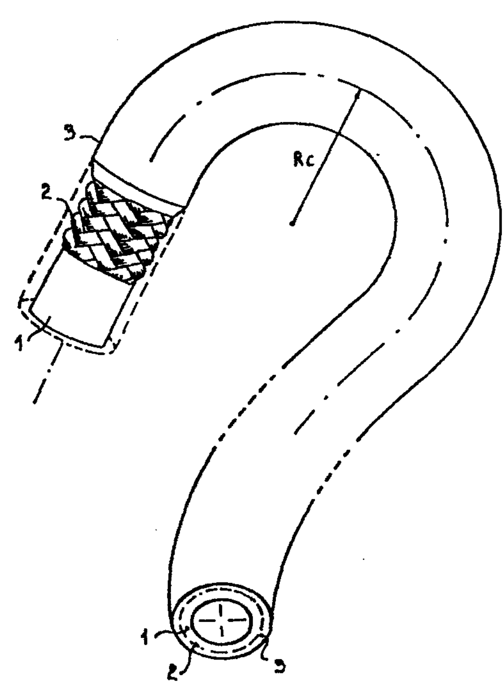


EP 0 184 513 A1

# TUYAU SOUPLE, BASSE PRESSION, NOTAMMENT POUR VEHICULER UN LIQUIDE DE REFROIDISSEMENT

L'invention concerne un tuyau souple, basse pression, susceptible de fonctionner dans des conditions mécaniques et climatiques sévères pour véhiculer sous pression un fluide qui peut être particulièrement agressif.

On entend par conditions mécaniques et climatiques sévères celles imposées à certains matériels militaires, notamment à des équipements aéroportés ; par conditions mécaniques, il s'agit essentiellement des problèmes de vibrations qui sont imposés aux équipements et également de la pression qui, même basse, peut atteindre néanmoins par exemple 18 bars, et qui est imposée dans le tuyau ; par conditions climatiques, on entend une gamme étendue de température, par exemple de - 55°C à + 125°C.

Suivant une utilisation plus particulièrement envisagée, le tuyau est destiné à véhiculer un liquide de refroidissement constitué de silicate d'esters pour le refroidissement d'illuminateurs lasers, tels que ceux équipant des systèmes de désignation d'objectif placés dans une nacelle. L'utilisation pour un refroidissement limité de détecteurs infrarouges est également envisageable.

Il est exigé également, pour une tuyauterie de ce genre, de donner une faible perte en produits volatils aux températures élevées de fonctionnement (au voisinage de 125°C dans l'exemple envisagé), de façon à fonctionner dans des ambiances où un très faible niveau de pollution est requis, ce qui est le cas de nombreux équipements comportant des éléments optiques tels que les systèmes de désignation d'objectif et les systèmes détecteurs infrarouges considérés.

Les tuyaux couramment utilisés dans de telles conditions et en particulier pour des applications aéroportées, sont généralement à base de caoutchouc synthétique renforcé par une tresse textile, en textile naturel ou synthétique. Le caoutchouc synthétique est le plus souvent du chloroprène ou du nitrile.

L'utilisation à basse température de ces tuyaux en caoutchouc synthétique est rendue possible par l'adjonction de plastifiant à la matière première. Pour atteindre les basses températures exigées, les quantités de plastifiant nécessaires deviennent rapidement importantes. Or ces produits ne sont pas liés chimiquement au caoutchouc synthétique de base et il s'ensuit qu'à chaud, ils constituent une source importante de pollution par évaporation des plastifiants. De plus et consécutivement, le tuyau se rigidifie au fur et à mesure et ceci à des températures de moins en moins basses, ce qui peut conduire jusqu'à la rupture dans un environnement de vibrations importantes. Les produits agressifs véhiculés par le tuyau peuvent également avoir une action sur les plastifiants et les dissoudre. Le tuyau devient alors poreux, ce qui constitue un risque de pollution supplémentaire.

Des tuyaux métalliques flexibles sont souvent utilisés dans un autre domaine, celui de l'industrie chimique, pour des applications impliquant également des conditions sévères d'utilisation. Ces tuyaux, outre le facteur de poids supplémentaire qu'ils présentent, ont également le désavantage de ne pouvoir fonctionner que dans des cas où leur profil géométrique reste simple, par exemple pour travailler dans un plan. Or, dans des applications d'équipement aéroporté, les tuyaux sont amenés à suivre des itinéraires complexes du fait du faible volume de place disponible. Ceci, joint au problème des vibrations produites par l'environnement, peut conduire à la rupture.

Il y a lieu de souligner également que les tuyaux à base de polytétrafluoréthylène extrudé, offrent la meilleure réponse aux problèmes de tenue à haute et basse température ainsi que de résistance aux produits agressifs. Par contre, ces tuyaux sont loin de

présenter une souplesse comparable à ceux à base de caoutchouc synthétique ce qui les rend guère utilisables pour des applications exigeant de faibles rayons de courbure.

Le but de l'invention est de remédier aux inconvénients précités notamment en utilisant un matériau de base différent, pour réaliser les tuyaux et tuyauteries susceptibles de répondre aux conditions mécaniques et climatiques sévères de fonctionnement et d'exploitation envisagées.

Les particularités de l'invention apparaîtront dans la description qui suit donnée à titre d'exemple à l'aide de la figure unique annexée qui représente un tuyau conforme à l'invention.

Le matériau de base utilisé selon l'invention pour réaliser les tuyaux ou tuyauteries consistent en un élastomère de fluorosilicone, dont la formule ci-après est celle des corps polyméthylsiloxane trifluoro :

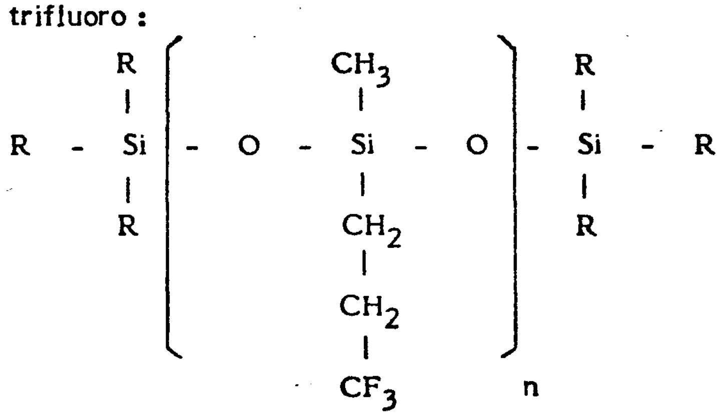

expression où "n" vaut environ 5000 et où R représente un groupement méthyle ou autre groupement fonctionnel.

La vulcanisation de ce matériau de base peut être effectuée à l'aide d'un peroxyde organique, par exemple peroxyde de dicumyle, peroxyde de benzoyle, etc...

Le choix de la qualité du fluorosilicone et de l'agent vulcanisant est lié à la facilité de mise en oeuvre, à la rapidité de la réaction de vulcanisation et aux valeurs mécaniques souhaitées.

La gamme des valeurs moyennes des propriétés mécaniques des fluorosilicones disponibles sur le marché est donnée ci-après :

| | |
|---|---|
| Densité, g/cm3 | 1,35 à 1,65 |
| Dureté Shore A | 35 à 80 |
| Résistance à la rupture, MPa | 5,5 à 9,7 |
| Allongement à la rupture, % | 150 à 600 |
| Module 100%, MPa | 0,5 à 6,2 |
| Déformation rémanente à la compression, 22 heures à 177°C% | 10 à 35 |
| Température d'utilisation | - 70°C à 235°C |

La fabrication du tuyau comporte les étapes suivantes :

- l'élastomère de fluorosilicone, sous forme d'une pâte est tout d'abord malaxé. Cette première opération de malaxage s'effectue à température ambiante dans une malaxeuse en y incorporant le produit de vulcanisation jusqu'à obtention d'un mélange homogène. La proportion de l'agent de vulcanisation dans ce mélange peut se situer autour de 1 à 2 pour cent.

- la seconde opération de fabrication est celle d'extrusion qui s'effectue également à température ambiante par passage du mélange obtenu dans une filière d'un ensemble d'extrusion. Le diamètre de la filière et la vitesse de passage à travers la filière sont les paramètres qui conditionnent l'épaisseur du tuyau obtenu.

- la troisième opération est celle de chauffage pour produire la vulcanisation, une température comprise entre 150°C et 200°C sera généralement suffisante.

On citera pour mémoire dans les opérations finales de découpe et de marquage, on notant que cette dernière peut s'effectuer aisément par sérigraphie directe sur la tuyauterie.

Une ou plusieurs fibres textiles, naturelles ou synthétiques, peuvent être adjointes pour former une gaine intérieure et renforcer le tube. Cette structure renforcée doit être envisagée, en particulier,dans les cas d'exploitation impliquant une circulation de fluide sous pression élevée. La compatibilité entre la matière de base précitée et les tresses textiles est bonne, toutefois l'adhérence peut encore être améliorée par un traitement approprié des tresses qui consiste selon des techniques connues à utiliser un primaire d'accrochage, ou agent d'adhérisation. En l'espèce, un matériau pour

constituer ce primaire d'accrochage pour du fluorosilicone peut être un silane. Il y a lieu de noter que la gaine intérieure n'est pas limitée à des tresses textiles par exemple, on pourra utiliser des tresses en fibres de verre ou métalliques, cette dernière version autorisant des températures et pressions de fonctionnement plus élevées ; le choix est dicté notamment en prenant compte de la nature du liquide à véhiculer et de la pression interne envisagée.

Pour des réalisations avec tresse intérieure l'opération d'extrusion précitée s'opère en deux temps selon des techniques connues.

La figure annexée représente un tuyau avec gainage interne. On distingue un tube intérieur 1 en fluorosilicone, une tresse de renforcement 2 et un tube extérieur en fluorosilicone 3. La tresse 2 et le tube intérieur 1 sont rendus apparents sur la partie terminale gauche partiellement dénudée.

Les tuyaux ainsi fabriqués à partir d'élastomère fluorosilicone sont particulièrement aptes à être utilisés dans des applications aéronautiques militaires, ou autres impliquant des conditions sévères du même ordre. Ils conservent une souplesse exceptionnelle dans une très large gamme de températures. Cette souplesse exceptionnelle autorise des rayons de courbure $R_C$ très faibles et laisse une grande liberté dans la conception de l'équipement environnant ces tuyaux. Ils tolèrent des variations de températures très rapides, sans que leur fonctionnement en soit altéré. Ils supportent également les conditions mécaniques exigées notamment les vibrations, aussi bien à froid qu'à chaud. En complément, ils donnent un fonctionnement satisfaisant dans des conditions de chaleur humide et présentent une bonne tenue aux champignons, ce qui confirme en outre une utilisation dans des conditions climatiques difficiles, telles que celles présentées dans les pays tropicaux.

Les tuyaux à base d'élastomère de fluorosilicone sont, de par leur nature chimique, insensibles à de nombreux produits très agressifs, en particulier, pour le liquide de refroidissement envisagé du type silicate d'ester. Ils sont de plus insensibles aux carburants et huiles rencontrés en aéronautique.

Toutes les propriétés précitées sont obtenues sans adjonction de produits volatils, du type plastifiant par exemple. Les tuyaux à base de fluorosilicone présentent donc, naturellement, un très faible taux de produits volatils à température élevée. Ce faible taux est principalement constitué de polymère de bas poids moléculaire.

Un traitement complémentaire de recuit du tuyau permet d'éliminer quasi complètement ce résidu et d'obtenir des tuyaux dont le risque de pollution par émission de produits volatils est pratiquement exclu.

## REVENDICATIONS

1. Tuyau souple, basse pression, caractérisé en ce qu'il est constitué en utilisant comme matériau de base un élastomère de fluorosilicone répondant à la formule :

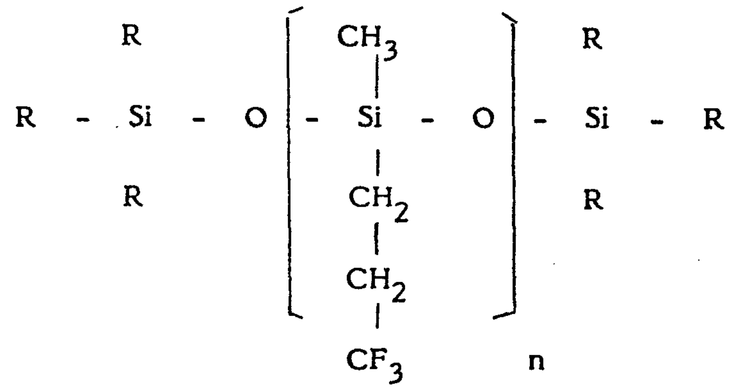

expression où "n" vaut environ 5000 et où R représente un groupement méthyle ou autre groupement fonctionnel ; le dit élastomère étant mélangé avec un agent de vulcanisation.

2. Tuyau selon la revendication 1, caractérisé en ce que l'agent de vulcanisation est un peroxyde organique.

3. Tuyau selon la revendication 1 ou 2, caractérisé en ce que sa composition ne comporte pas d'adjonction de produits volatils et que sa fabrication est complétée par une opération finale de recuit qui lui confère un taux pratiquement nul de produits volatils à température élevée.

4. Tuyau selon l'une quelconque des revendications 1 à 3 caractérisé en ce qu'il est renforcé par un gainage interne.

5. Tuyau selon la revendication 4, caractérisé en ce que le gainage interne est formé d'une tresse naturelle ou synthétique.

6. Tuyau selon la revendication 4, caractérisé en ce que le gainage interne est formé d'une tresse de fibres de verre.

7. Tuyau selon la revendication 4, caractérisé en ce que le gainage interne est formé d'une tresse métallique.

8. Tuyau selon l'une quelconque des revendications 4 à 7, utilisé pour constituer une tuyauterie destinée à fonctionner dans

des conditions mécaniques et climatiques sévères en supportant des vibrations importantes, dans une gamme étendue de températures et en véhiculant un liquide sous pression.

9. Tuyauterie selon la revendication 8, caractérisée en ce que la gamme de températures inclut la plage - 55°C à + 125°C et que le liquide à véhiculer est un liquide de refroidissement sous une pression pouvant être supérieure à 18 bars.

10. Tuyauterie selon la revendication 9, caractérisée en ce qu'elle est destinée à équiper un équipement aéroporté comportant des éléments optiques et un illuminateur laser, pour permettre le refroidissement de l'illuminateur.

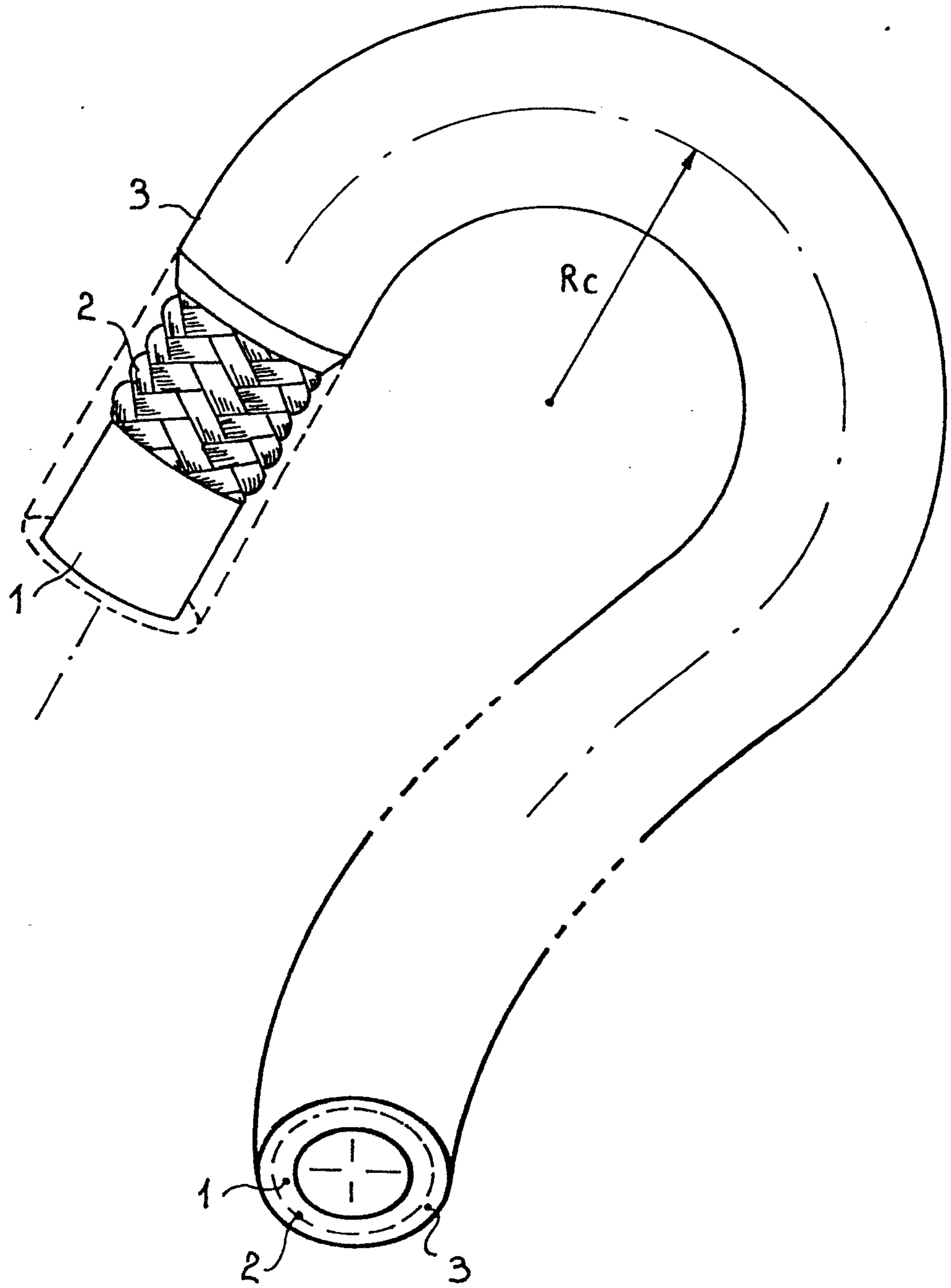
3
2
1
Rc
1
2
3

Office européen des brevets

# RAPPORT DE RECHERCHE EUROPEENNE

0184513

Numéro de la demande

EP 85 40 2393

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A- 773 983 (W.A. MELSON)<br>* Page 1, lignes 25-86 *<br>--- | 1,2,4,7 | F 16 L 9/12<br>F 16 L 11/08 |
| X | FR-A-2 094 522 (TECALEMIT)<br>* Revendications 3,4 *<br>--- | 1,4,7 | |
| X | US-A-3 422 855 (D.E. WEYER)<br>* Colonne 2, lignes 43-60 *<br>--- | 1 | |
| X | US-A-3 561 493 (P. MAILLARD)<br>* Colonne 2, lignes 28-60 *<br>--- | 1 | |
| A | FR-A-2 406 772 (A. ANGIOLETTI)<br>* Page 6, ligne 20 - page 7, ligne 1 *<br>--- | 1,4,5,7 | **DOMAINES TECHNIQUES RECHERCHES (Int. Cl.4)** |
| A | FR-A-2 407 415 (DE GREGORIO)<br>* Revendication 1 *<br>----- | 1,5,6 | F 16 L |

Le présent rapport de recherche a été établi pour toutes les revendications

| Lieu de la recherche | Date d'achèvement de la recherche | Examinateur |
|---|---|---|
| LA HAYE | 03-02-1986 | ANGIUS P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82